# EUROPEAN PATENT APPLICATION

(11) **EP 4 501 557 A1**
(43) Date of publication of application: **05.02.2025**
(21) Application number: 23780023.0
(22) Date of filing: 23.03.2023
(51) Int. Cl.: B25J 15/06

(54) **ROBOT HAND, PROCESSING DEVICE, DRIVE MECHANISM CONTROL UNIT, PROGRAM, AND CONTROL SYSTEM**

(30) Priority: 30.03.2022 JP 2022056033
(71) Applicant: Kyocera Corporation, Kyoto-shi, Kyoto 612-8501 (JP)
(72) Inventor: UCHITAKE, Masahiro, Kyoto-shi, Kyoto 612-8501 (JP); MIKI, Masafumi, Kyoto-shi, Kyoto 612-8501 (JP); ISHIDA, Takayuki, Kyoto-shi, Kyoto 612-8501 (JP); MIYAMURA, Hiroaki, Kyoto-shi, Kyoto 612-8501 (JP)
(74) Representative: TBK
(86) International application number: PCT/JP2023/011451
(87) International publication number: WO 2023/190012

(57) **Abstract**

A robot hand includes a suction structure and a drive. The suction structure includes a plurality of suction portions that suck an object. The drive changes a positional relationship between the plurality of suction portions.

## Description

### TECHNICAL FIELD

The present disclosure relates to a robot hand.

### BACKGROUND OF INVENTION

Patent Literature 1 describes a technique for sucking an object.

### CITATION LIST

### PATENT LITERATURE

Patent Literature 1: Japanese Unexamined Patent Application Publication No. 2018-89732

### SUMMARY

One or more aspects of the present disclosure are directed to a robot hand, a processing device, a drive controller, a program, and a control system. In one embodiment, a robot hand includes a suction structure and a drive. The suction structure includes a plurality of suction portions that suck an object. The drive changes a positional relationship between the plurality of suction portions.

In one embodiment, a processing device includes a specifier that specifies, based on object information about the object, the positional relationship between the plurality of suction portions in the suction structure included in the above robot hand.

A drive controller controls, based on a specification result from the specifier included in the above processing device, the drive included in above the robot hand.

In one embodiment, a program causes a computer to function as the above processing device.

In one embodiment, a program causes a computer to function as the above drive controller.

In one embodiment, a control system includes the above robot hand and the above processing device.

### BRIEF DESCRIPTION OF THE DRAWINGS

FIG. 1 is a schematic diagram of an example robotic system.
FIG. 2 is a block diagram of an example robot control device.
FIG. 3 is a block diagram of an example hand control device.
FIG. 4 is a schematic diagram of an example robot hand.
FIG. 5 is a schematic diagram of an example robot hand.
FIG. 6 is a schematic diagram of an example robot hand.
FIG. 7 is a schematic diagram of an example robot hand.
FIG. 8 is a schematic diagram of an example robot hand.
FIG. 9 is a partial block diagram of the robotic system, illustrating its example structure.
FIG. 10 is a schematic diagram of an example object.
FIG. 11 is a flowchart of example operations of the robot control device and the hand control device.
FIG. 12 is a schematic diagram of multiple suction portions in an example positional relationship.
FIG. 13 is a schematic diagram of the multiple suction portions in an example positional relationship.
FIG. 14 is a schematic diagram of the multiple suction portions in an example positional relationship.
FIG. 15 is a flowchart of example operations of the robot control device and the hand control device.

### DESCRIPTION OF EMBODIMENTS

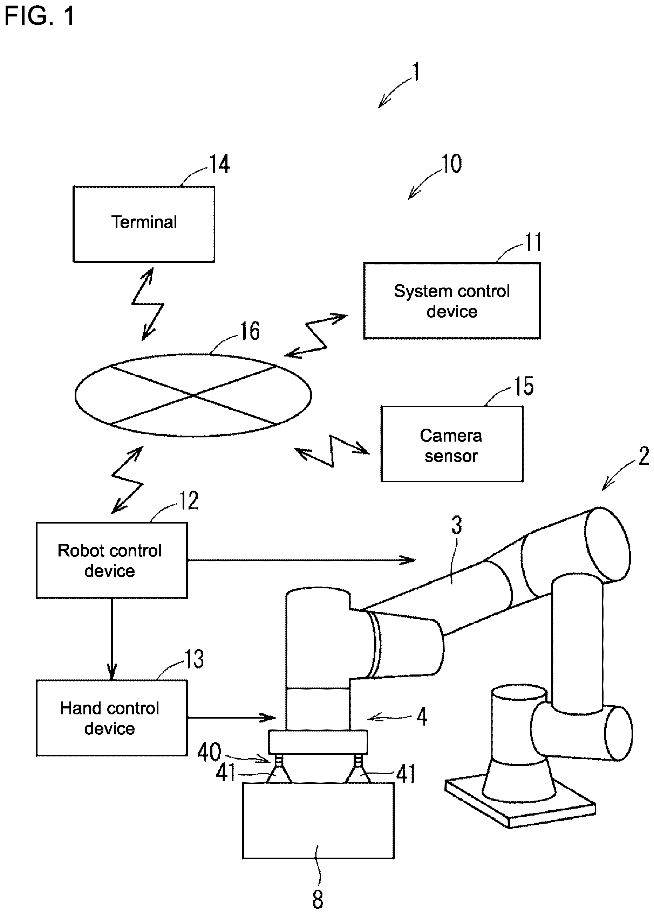

FIG. 1 is a schematic diagram of an example robotic system 1. The robotic system 1 includes, for example, a robot 2 and a robot control system 10 that controls the robot 2. The robot control system 10 (also referred to as a control system 10) includes, for example, a system control device 11, a robot control device 12, a hand control device 13, a terminal 14, and a camera sensor 15.

The robot 2 transfers an object 8, for example, from a work-start table to a work-target table. The robot 2 includes, for example, an arm 3 and a robot hand 4 connected to the arm 3. The robot hand 4 can hold the object 8 by, for example, suction. The robot hand 4 includes a suction structure 40 to suck the object 8. The suction structure 40 includes, for example, multiple suction portions 41 to suck the object 8. The robot 2 sucks, for example, the object 8 on the work-start table with the suction structure 40. The robot 2 moves the arm 3 with the suction structure 40 sucking the object 8 to transfer the object 8 to the work-target table. The object 8 is also referred to as a workpiece. Note that the robot 2 may perform any work other than the above example work.

The system control device 11, the robot control device 12, the terminal 14, and the camera sensor 15 are connected to, for example, a network 16 including the Internet. The system control device 11, the robot control device 12, the terminal 14, and the camera sensor 15 can communicate with one another through the network 16. Note that the hand control device 13 may be connected to the network 16. At least two selected from the group consisting of the system control device 11, the robot control device 12, the hand control device 13, the terminal 14, and the camera sensor 15 may communicate directly with each other without using the network 16. Each of the system control device 11, the robot control device 12, the hand control device 13, and the terminal 14 may be a processing device.

The camera sensor 15 can capture, for example, an image of a work area of the robot 2. The camera sensor 15 can capture, for example, an image of the object 8. The camera sensor 15 can generate, for example, a range image including information about a distance to each measuring point within the work area, and a color image including the object 8. The camera sensor 15 is also referred to as a three-dimensional (3D) camera. The camera sensor 15 can output the generated range image and the generated color image to the network 16.

The system control device 11 manages an overall operation of the robot control system 10. The system control device 11 is, for example, a computer. The system control device 11 may be, for example, a cloud server.

The terminal 14 can receive inputs from a user and provide notifications to the user. The terminal 14 is, for example, a computer. The terminal 14 may be, for example, a desktop or a laptop personal computer, a tablet terminal, a mobile phone such as a smartphone, or any other device. The user can input, for example, information for controlling the robot 2 into the terminal 14.

The terminal 14 includes, for example, an inputter that receives inputs from the user and a notifier that provides notifications to the user. The inputter may include, for example, a mouse and a keyboard. The inputter may include a touch sensor to receive touch operations performed by the user. The notifier may include a display to display various items of information. The display may be, for example, a liquid crystal display, an organic electroluminescent (EL) display, or a plasma display panel. When the inputter includes the touch sensor, the touch sensor and the display may together serve as a touchscreen display that performs display and detects touches. The touchscreen display can detect touch operations on a display surface of the display. The notifier may include a speaker. The inputter and the notifier serve as a user interface.

The robot control device 12 manages an overall operation of the robot 2. For example, the robot control device 12 can control the arm 3. The robot control device 12 controls a position and an orientation of the arm 3 to transfer the object 8 held by the robot hand 4 from the work-start table to the work-target table.

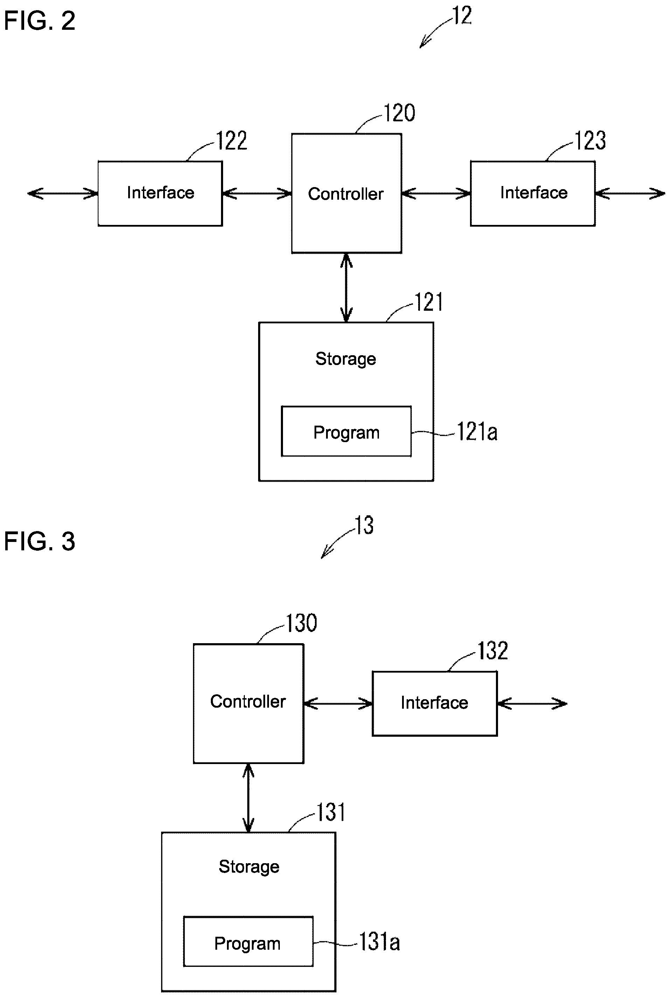

FIG. 2 is a block diagram of the robot control device 12, illustrating its example structure. As illustrated in FIG. 2, the robot control device 12 includes, for example, a controller 120, a storage 121, an interface 122, and an interface 123. The robot control device 12 may be, for example, a control circuit. The robot control device 12 is, for example, a computer.

The interface 122 can communicate with the network 16 based on, for example, a communication standard such as Wi-Fi. The interface 122 may be, for example, an interface circuit. The interface 122 may be, for example, a communicator or a communication circuit. The interface 122 may be connected to the network 16 with wires or wirelessly. The interface 122 receives information from the network 16 and inputs the information into the controller 120. The interface 122 outputs information from the controller 120 to the network 16.

The interface 123 can transmit and receive information to and from the hand control device 13. The controller 120 can transmit and receive information to and from the hand control device 13 through the interface 123. The interface 123 may be, for example, an interface circuit.

The controller 120 can control other components of the robot control device 12 to centrally manage an operation of the robot control device 12. The controller 120 may be, for example, a control circuit. The controller 120 includes at least one processor that performs control and processing for implementing various functions, as described in more detail below.

In various embodiments, the at least one processor may be a single integrated circuit (IC), or multiple ICs, multiple discrete circuits, or both these circuits connected to one another for mutual communication. The at least one processor may be implemented using any of various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors (DSPs), programmable logic devices, field programmable gate arrays, combinations of any of these devices or configurations, or combinations of other known devices and configurations. The processor may perform the functions described below.

The controller 120 may include, for example, a central processing unit (CPU) as the processor. The storage 121 may include a non-transitory recording medium readable by the CPU in the controller 120, such as a read-only memory (ROM) and a random-access memory (RAM). The storage 121 stores, for example, a program 121a for controlling the robot control device 12. The various functions of the controller 120 are implemented by, for example, the CPU in the controller 120 executing the program 121a in the storage 121.

Note that the controller 120 may have any structure other than the above example structure. For example, the controller 120 may include multiple CPUs. The controller 120 may also include at least one DSP. The functions of the controller 120 may be implemented entirely or partially by a hardware circuit, without using software to implement the functions. The storage 121 may also include a non-transitory computer-readable recording medium other than the ROM and the RAM. The storage 121 may include, for example, a small hard disk drive and a solid-state drive (SSD).

The hand control device 13 can control the robot hand 4. The hand control device 13 may be located inside the robot hand 4 or outside the robot hand 4. The hand control device 13 obtains information directed to the hand control device 13 from the network 16 through the robot control device 12. The hand control device 13 outputs information directed to the network 16 through the robot control device 12 to the network 16. FIG. 3 is a block diagram of the hand control device 13, illustrating its example structure.

As illustrated in FIG. 3, the hand control device 13 includes, for example, a controller 130, a storage 131, and an interface 132. The hand control device 13 may be, for example, a control circuit. The hand control device 13 is, for example, a computer.

The interface 132 can transmit and receive information to and from interface 123 in the robot control device 12. The controller 130 can transmit and receive information to and from the robot control device 12 through the interface 132. The interface 132 may be, for example, an interface circuit.

The controller 130 can control other components of the hand control device 13 to centrally manage an operation of the hand control device 13. The controller 130 may be, for example, a control circuit. The controller 130 includes at least one processor that performs control and processing for implementing various functions, as described in more detail below. The processor included in the controller 130 may be the same as or similar to the processor included in the controller 120 in the robot control device 12 described above.

The controller 130 may include, for example, a CPU as the processor. The storage 131 may include a non-transitory recording medium readable by the CPU in the controller 130, such as a ROM and a RAM. The storage 131 stores, for example, a program 131a for controlling the hand control device 13. The various functions of the controller 130 are implemented by, for example, the CPU in the controller 130 executing the program 131a in the storage 131.

Note that the controller 130 may have any structure other than the above example structure. For example, the controller 130 may include multiple CPUs. The controller 130 may also include at least one DSP. The functions of the controller 130 may be implemented entirely or partially by a hardware circuit, without using software to implement the functions. The storage 131 may also include a non-transitory computer-readable recording medium other than the ROM and the RAM, in the same manner as or in a similar manner to the storage 121.

In the robot control system 10 with the above structure, the information output from the terminal 14 can be input into the robot control device 12 or the hand control device 13 through, for example, the system control device 11. The information output from the robot control device 12 or the hand control device 13 can be input into the terminal 14 through, for example, the system control device 11. The range image and the color image output from the camera sensor 15 may be input into the robot control device 12 or the hand control device 13 through, for example, the system control device 11.

Note that the information output from the terminal 14 may be input into the robot control device 12 or the hand control device 13 without being through the system control device 11. The information output from the robot control device 12 or the hand control device 13 may be input into the terminal 14 without being through the system control device 11. The range image and the color image output from the camera sensor 15 may be input into the robot control device 12 or the hand control device 13 without being through the system control device 11.

The robot control system 10 may include multiple system control devices 11. The robot control system 10 may include multiple robot control devices 12. The robot control system 10 may include multiple hand control devices 13. The robot control system 10 may include multiple terminals 14. The robotic system 1 may include multiple robots 2. In this case, each of the robots 2 may be controlled by at least one robot control device 12.

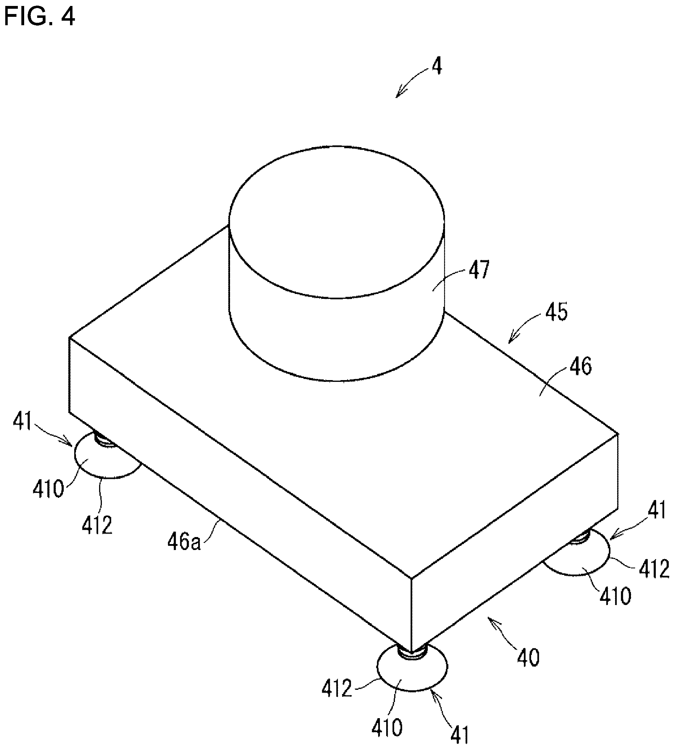

FIGs. 4 to 8 are each a schematic diagram of an example robot hand 4. As illustrated in FIGs. 4 to 8, the robot hand 4 includes, for example, an outer case 45 accommodating multiple components and the suction structure 40 protruding from the outer case 45. The outer case 45 includes, for example, a body 46 and a connection portion 47 connected to the arm 3. The connection portion 47 corresponds to a wrist of the robot hand 4. The connection portion 47 is hereafter also referred to as a wrist 47. The body 46 accommodates, for example, a negative pressure generator 50 and a drive 51 (described later).

The suction structure 40 includes, for example, four suction portions 41. Each of the suction portions 41 protrudes from a bottom surface 46a of the body 46. Each of the suction portions 41 is movable along the bottom surface 46a. Each of the suction portions 41 is movable along a plane on the bottom surface 46a. Each of the suction portions 41 is individually movable, or in other words, is independently movable. A positional relationship between the multiple suction portions 41 can be changed along a plane parallel to the bottom surface 46a. In the robot hand 4, the positional relationship between the multiple suction portions 41 can be changed. Each of the suction portions 41 is also referred to as, for example, a suction nozzle. The bottom surface 46a of the body 46 is, for example, rectangular.

Each of the suction portions 41 has a suction pad 410 at its tip. The suction pad 410 is, for example, an elastic member made of synthetic rubber. The suction pad 410 is hollow and includes a suction opening 411. When the suction portion 41 sucks the object 8, the suction opening 411 in the suction pad 410 is covered with the object 8 with an opening edge 412 of the suction opening 411 in contact with the object 8. Pressure inside the suction pad 410 is reduced by the negative pressure generator 50 (described later) to cause the opening edge 412 of the suction pad 410 to be in tight contact with the object 8. The suction pad 410 thus sucks the object 8. The suction pad 410 sucking the object 8 elastically deforms and contracts under the reduced pressure inside the suction pad 410. In this state, the suction pad 410 has a lower height, or the suction opening 411 has a smaller diameter. The suction pad 410 may be a flat pad as illustrated in the examples in FIGs. 4 to 8, or may be a bellows pad. The suction pad 410 is also referred to as a vacuum pad. The multiple suction pads 410 are located, for example, in the same plane. The multiple suction pads 410 are arranged along the bottom surface 46a of the body 46. An imaginary plane on which the multiple suction pads 410 are located is hereafter referred to as a pad placement plane. The pad placement plane is, for example, parallel to the bottom surface 46a.

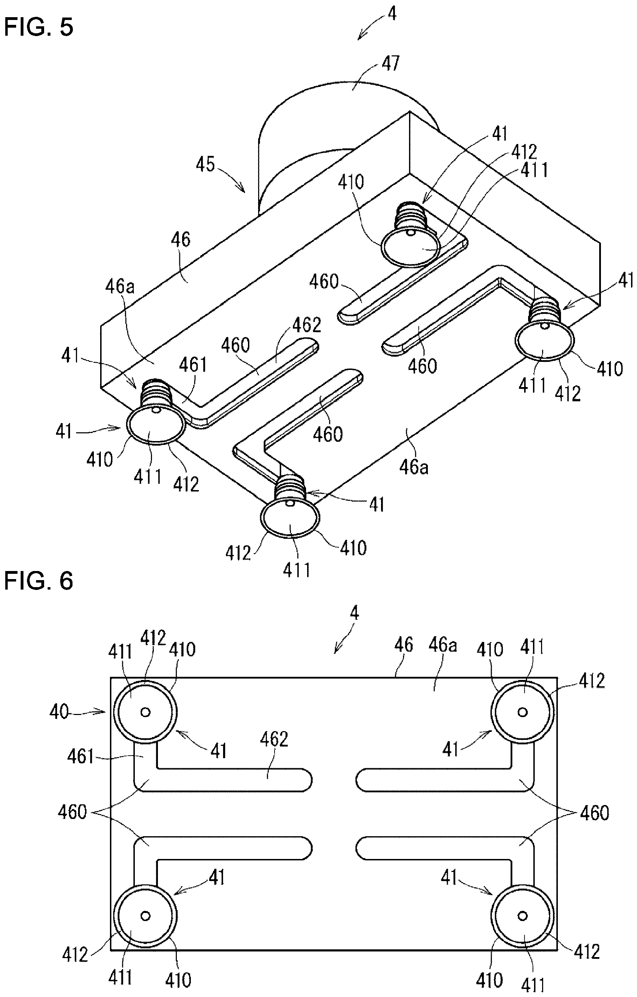

As illustrated in FIGs. 5 to 8, the bottom surface 46a of the body 46 of the outer case 45 includes multiple grooves 460 for the respective multiple suction portions 41. The multiple grooves 460 are spaced from each other. Each of the suction portions 41 partially protrudes through the corresponding groove 460. Each of the suction portions 41 is movable along the corresponding groove 460. In this structure, the suction pad 410 in each of the suction portions 41 is movable along the groove 460 corresponding to the suction portion 41. Note that the multiple suction portions 41 may be located in a single groove. In the examples in FIGs. 5 to 8, the multiple suction portions 41 are individually located in the multiple grooves 460. This can avoid interference between the suction portions 41 during position control for the suction portions 41.

Each of the grooves 460 is, for example, L-shaped. Each of the grooves 460 has a first groove 461 and a second groove 462. The second groove 462 extends from one longitudinal end of the first groove 461 in a direction different from a direction in which the first groove 461 extends. The second groove 462 extends from the first groove 461, for example, perpendicularly to the first groove 461. The first groove 461 starts from one corner of the bottom surface 46a and extends along a short side of the bottom surface 46a to nearly the center of the short side. The second groove 462 starts from one of the longitudinal ends of the first groove 461, or specifically from an end of the first groove 461 adjacent to the center of the short side of the bottom surface 46a, and extends along a long side of the bottom surface 46a to nearly the center of the long side.

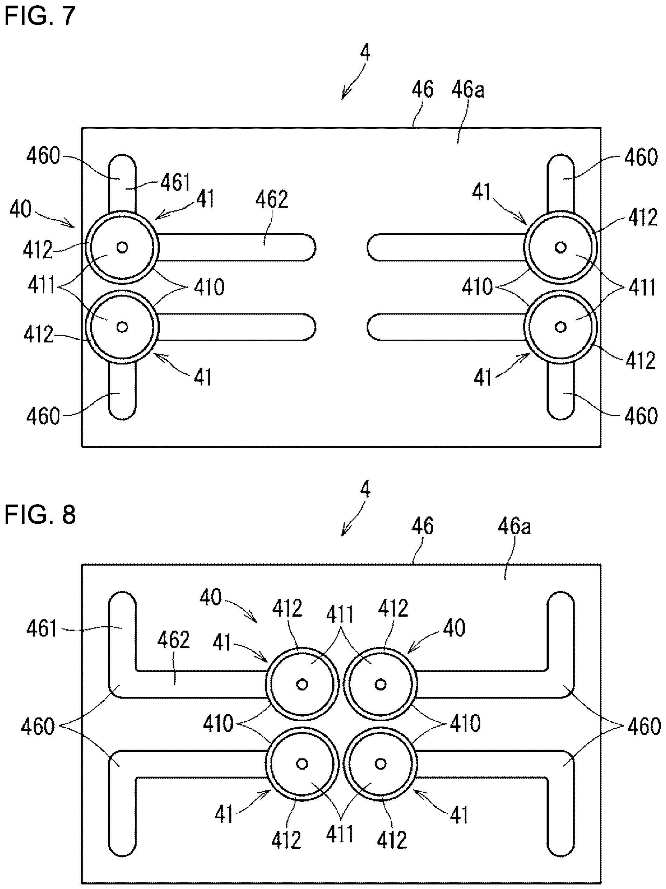

FIGs. 6 to 8 illustrate the multiple suction portions 41 with their positional relationship being changed. In the example in FIG. 6, each of the suction portions 41 is located at an end of the first groove 461 in the corresponding groove 460 adjacent to a corner of the bottom surface 46a. The four suction portions 41 included in the suction structure 40 are thus located at the respective four corners of the bottom surface 46a. After each of the suction portions 41 in FIG. 6 moves along the first groove 461, the multiple suction portions 41 have, for example the positional relationship illustrated in FIG. 7. In the example in FIG. 7, each of the suction portions 41 is located at a corner of the corresponding groove 460 (specifically, a boundary between the first groove 461 and the second groove 462). After each of the suction portions 41 in FIG. 7 moves along the second groove 462, the multiple suction portions 41 have, for example the positional relationship illustrated in FIG. 8. In the example in FIG. 8, each of the suction portions 41 is located at an end of the second groove 462 in the corresponding groove 460 opposite to the first groove 461. The multiple suction portions 41 are thus located at the center of the bottom surface 46a.

As described above, each of the grooves 460 includes the first groove 461 and the second groove 462 that extend in different directions. Each of the suction portions 41 is thus movable in two directions along the plane parallel to the bottom surface 46a. Thus, the positional relationship between the multiple suction portions 41 can be changed in the two directions along the plane parallel to the bottom surface 46a.

Note that each of the grooves 460 may have any shape other than the above example shape. Instead of being L-shaped as in the examples in FIGs. 5 to 8, each of the grooves 460 may be, for example, in a U shape with one first groove 461 and two facing second grooves 462, or may be in a U shape with one second groove 462 and two facing first grooves 461. Each of the grooves 460 may be in a square shape with two facing first grooves 461 and two facing second grooves 462. Each of the grooves 460 may be in a linear shape including one first groove 461 or one second groove 462. Although the multiple grooves 460 have the same shape in the examples in FIGs. 5 to 8, the multiple grooves 460 may have different shapes. Some of the multiple grooves 460 may have a shape different from the shape of the others. When each of the grooves 460 includes at least two grooves extending in different directions, each of the suction portions 41 is movable in at least two directions along the plane parallel to the bottom surface 46a. In this case, the positional relationship between the multiple suction portions 41 can be changed in at least two directions along the plane parallel to the bottom surface 46a.

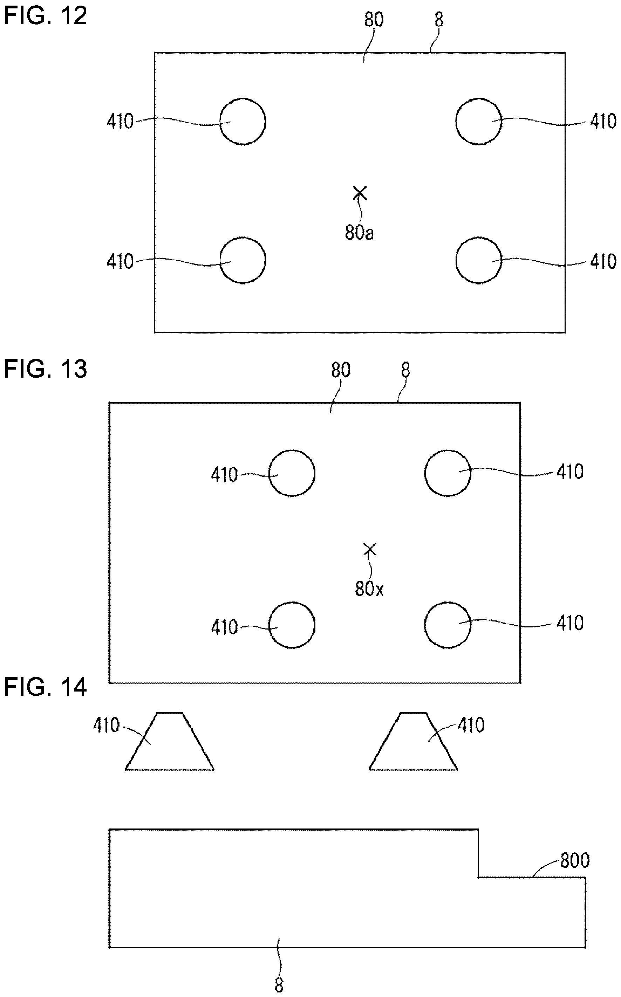

Note that the suction portions 41 may have any degree of freedom of movement other than that in the above example. The positional relationship between the multiple suction portions 41 is set based on object information about the object 8, as described later. Each of the suction portions 41 may have the degree of freedom of movement set as appropriate to achieve the positional relationships between the multiple suction portions 41 in the examples described later (e.g., the examples in FIGs. 12 to 14 described later).

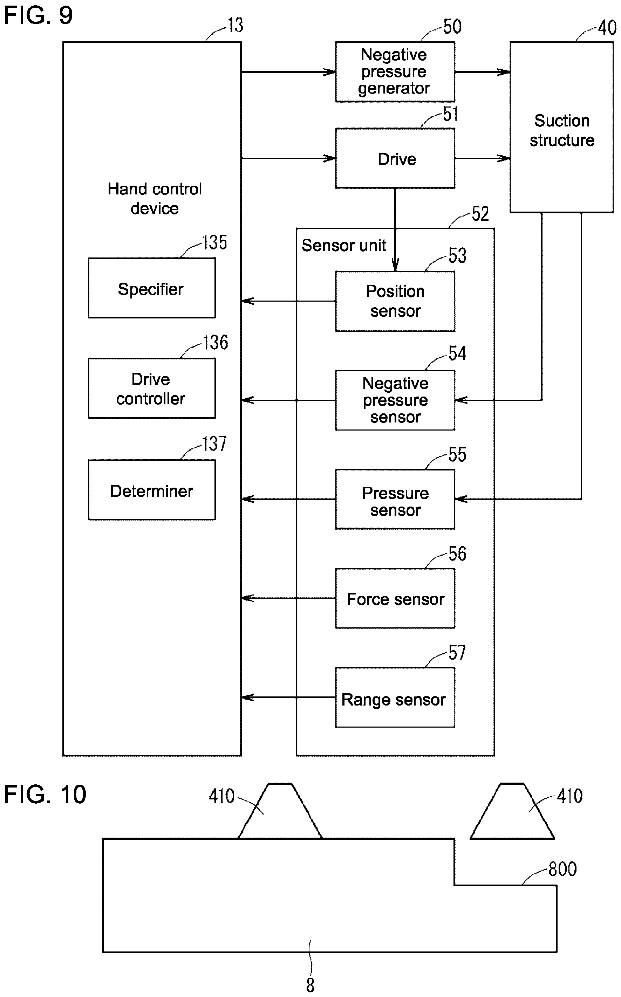

FIG. 9 is a block diagram of the robotic system 1, illustrating its example structure for the control of the robot hand 4. As illustrated in FIG. 9, the robot 2 includes, for example, the negative pressure generator 50, the drive 51, and a sensor unit 52 to obtain various items of information about the robot 2.

The negative pressure generator 50 is connected to the multiple suction portions 41 to generate negative pressure in each of the suction pads 410 and reduce the pressure in the suction pad 410. The negative pressure generator 50 can also stop generating the negative pressure in each of the suction pads 410. When generation of the negative pressure is stopped in the suction pads 410 sucking the object 8, the suction pads 410 release the suction of the object 8. The negative pressure generator 50 includes, for example, a vacuum pump. The negative pressure generator 50 is located, for example, in the body 46 of the outer case 45 in the robot hand 4.

The drive 51 can move each of the suction portions 41 to change the positional relationship between the multiple suction portions 41. The drive 51 may include, for example, an electric actuator such as a motor. The drive 51 may move each of the suction portions 41 independently. In this case, the drive 51 may include multiple electric actuators that move the respective multiple suction portions 41. The drive 51 may move the multiple suction portions 41 together. In this case, the drive 51 may include a single electric actuator to move the multiple suction portions 41 together. The drive 51 is located, for example, in the body 46 of the outer case 45 in the robot hand 4.

The sensor unit 52 includes multiple types of sensors. The sensor unit 52 includes, for example, a position sensor 53, a negative pressure sensor 54, a pressure sensor 55, a force sensor 56, and a range sensor 57. A detection result from each of the position sensor 53, the negative pressure sensor 54, the pressure sensor 55, the force sensor 56, and the range sensor 57 is input into the hand control device 13.

The position sensor 53 can detect a rotational position of the motor included in the drive 51. The position sensor 53 is, for example, a rotary encoder. When the drive 51 includes multiple motors, the sensor unit 52 may include multiple position sensors 53 that detect rotational positions of the respective multiple motors. A drive controller 136 (described later) included in the hand control device 13 identifies a position of each of the suction portions 41 based on the detection result from at least one position sensor 53 included in the sensor unit 52. The drive controller 136 controls the drive 51 based on the identified position to set the positional relationship between the multiple suction portions 41 to an intended relationship. The position sensor 53 is located, for example, in the body 46 of the outer case 45.

The sensor unit 52 includes multiple negative pressure sensors 54 for the respective multiple suction portions 41. Each of the negative pressure sensors 54 can detect the negative pressure in the suction pad 410 in the corresponding suction portion 41. The negative pressure sensor 54 may be a semiconductor sensor, a metal thin-film sensor, or any other sensor. The negative pressure sensor 54 is located, for example, in the body 46 of the outer case 45.

The sensor unit 52 includes multiple pressure sensors 55 for the respective multiple suction portions 41. Each of the pressure sensors 55 detects contact pressure applied to the object 8 by the suction pad 410 in the corresponding suction portion 41. When the suction pad 410 is made of pressure-sensitive conductive rubber, for example, the suction pad 410 may be a part of the corresponding pressure sensor 55. The pressure-sensitive conductive rubber refers to rubber with its electrical resistance varying with a pressure applied. When the suction pad 410 is made of the pressure-sensitive conductive rubber, the electrical resistance of the suction pad 410 varies with the contact pressure applied to the object 8 by the suction pad 410. The pressure sensor 55 may detect the electrical resistance of the suction pad 410 made of the pressure-sensitive conductive rubber, and may output the detection result as the contact pressure applied to the object 8 by the suction pad 410. Note that the pressure sensor 55 may be a semiconductor sensor or a metal thin-film sensor. In this case, the pressure sensor 55 may be located at the opening edge 412 of the suction pad 410.

The force sensor 56 is located, for example, in the wrist 47 on the outer case 45. The force sensor 56 can detect, for example, a force and a moment applied to the robot hand 4. The force sensor 56 is, for example, a six-axis force sensor. The force sensor 56 can detect a force along an x-axis applied to the robot hand 4, a force along a y-axis applied to the robot hand 4, and a force along a z-axis applied to the robot hand 4. The force sensor 56 can also detect a moment about the x-axis applied to the robot hand 4, a moment about the y-axis applied to the robot hand 4, and a moment about the z-axis applied to the robot hand 4. The z-axis is, for example, perpendicular to the bottom surface 46a of the body 46 of the outer case 45. The x-axis is perpendicular to the z-axis, and the y-axis is perpendicular to the z-axis and the x-axis. The x-axis and the y-axis are parallel to the bottom surface 46a. The force sensor 56 may be, for example, an electrical resistance sensor, a capacitance sensor, a piezoelectric sensor, or an optical sensor.

The sensor unit 52 includes multiple range sensors 57 for the respective multiple suction portions 41. Each of the range sensors 57 detects a distance between the corresponding suction portion 41 and the object 8. The range sensor 57 is also referred to as a distance measurement sensor. The range sensor 57 may be, for example, an optical sensor using laser beams, a radio wave sensor using millimeter waves, or an ultrasonic sensor using ultrasonic waves. The range sensor 57 is located, for example, on a portion of the suction portion 41 other than the suction pad 410. The distance detected by the range sensor 57 is shorter when the suction pad 410 is pressed against the object 8 and deforms. The distance detected by the range sensor 57 indicates strength with which the suction pad 410 is pressed against the object 8, or in other words, the tightness of contact of the suction pad 410 with the object 8. The distance detected by the range sensor 57 also indicates a suction condition of the suction pad 410 sucking the object 8.

The controller 130 in the hand control device 13 as the processing device controls the robot hand 4 based on the detection results from the sensor unit 52. The CPU in the controller 130 executes the program 131a in the storage 131 to implement, as functional blocks, a specifier 135, the drive controller 136, and a determiner 137 in the controller 130. Note that the functions of the specifier 135 may be implemented entirely or partially by a hardware circuit, without using software to implement the functions. The drive controller 136 and the determiner 137 also have the same or a similar structure.

The specifier 135 specifies the positional relationship between the multiple suction portions 41 based on the object information about the object 8. In other words, the specifier 135 specifies, based on the object information, the manner in which the multiple suction portions 41 are positioned relative to each other. The specifier 135 can change the positional relationship between the multiple suction portions 41 for each object 8. For example, the specifier 135 can change the positional relationship between the multiple suction portions 41 based on a type of the object 8. Note that the multiple suction portions 41 can be in the same positional relationship for sucking different objects 8 as a result of the specifier 135 specifying the positional relationships between the multiple suction portions 41 for different objects 8 based on their object information.

The object information used to specify the positional relationship between the multiple suction portions 41 may include, for example, at least one of shape information indicating a shape of the object 8 (also referred to as an object shape) or center-of-gravity position information indicating a position of the center of gravity of the object 8 (also referred to as an object center-of-gravity position). Object information hereafter refers to the object information used to specify the positional relationship between the multiple suction portions 41. The object information is stored in the storage 131. The object information is updated for each change of the type of the object 8.

The shape information included in the object information may be input by the user into the robot control system 10. In this case, the user may input the shape information into, for example, the terminal 14. The shape information input into the terminal 14 is input into the hand control device 13 and stored into the storage 131. The shape information may be, for example, 3D point cloud data indicating the object shape or 3D CAD data about the object 8.

The shape information may be generated by the specifier 135. The specifier 135 may generate the shape information based on, for example, the range image and the color image obtained from the camera sensor 15. In this case, the range image and the color image output from the camera sensor 15 are input into the hand control device 13 and stored into the storage 131. The specifier 135 generates, for example, 3D point cloud data indicating the object shape based on the range image and the color image in the storage 131. The 3D point cloud data generated by the specifier 135 is stored into the storage 131 as the shape information.

The center-of-gravity position information included in the object information may be input by the user into the robot control system 10. In this case, the user may input the center-of-gravity position information into, for example, the terminal 14. The center-of-gravity position information input into the terminal 14 is stored into the storage 131 in the hand control device 13, in the same manner as or in a similar manner to the shape information input into the terminal 14.

The center-of-gravity position information may be generated by the specifier 135. The specifier 135 may generate the center-of-gravity position information based on, for example, the range image and the color image obtained from the camera sensor 15. In this case, for example, the specifier 135 generates the 3D point cloud data indicating the object shape based on the range image and the color image, in the same manner as or in a similar manner to when generating the shape information. The specifier 135 then identifies the object center-of-gravity position based on the generated 3D point cloud data. The specifier 135 generates the center-of-gravity position information indicating the identified object center-of-gravity position, and stores the generated information into the storage 131. The specifier 135 may identify the object center-of-gravity position based on the 3D CAD data about the object 8 stored in the storage 131, and may generate the center-of-gravity position information indicating the identified object center-of-gravity position.

The object information may include first area information indicating an area (suction-inaccessible area) on a surface of the object 8 that is inaccessible to sucking performed by the suction structure 40. For example, as illustrated in FIG. 10, the object 8 may include an area 800 (also referred to as a range 800) on the surface of the object 8 that is lower than surrounding areas and inaccessible to sucking performed by the suction pads 410. The area 800 is referred to as a suction-inaccessible area 800. FIG. 10 illustrates examples of the object 8 and the multiple suction pads 410 as viewed in a direction along the pad placement plane.

The object information may also include second area information indicating an area (suction-prohibited area) that is prohibited from undergoing sucking performed by the suction structure 400. The suction-prohibited area may include, for example, an area on the surface of the object 8 that may be damaged when sucked by the suction pads 410. The suction-prohibited area may also include, for example, an area on the surface of the object 8 that may deform when sucked by the suction pads 410.

At least one of the first area information or the second area information may be input by, for example, the user into the robot control system 10. In this case, the user may input at least one of the first area information or the second area information into, for example, the terminal 14. At least one of the first area information or the second area information input into the terminal 14 is stored into the storage 131 in the hand control device 13, in the same manner as or in a similar manner to the shape information input into the terminal 14.

The drive controller 136 controls the drive 51 based on a specification result from the specifier 135. The drive controller 136 controls the position of each of the multiple suction portions 41 while identifying its position based on the detection result from at least one position sensor 53 to cause the multiple suction portions 41 to have the positional relationship specified by the specifier 135. Note that, although the drive controller 136 performs movement control for each of the suction portions 41 in the present embodiment, the drive controller 136 may perform movement control for at least one of the suction portions 41. In this case, a groove 460 may be eliminated for a suction portion 41 that is not subject to movement control.

The determiner 137 determines the suction state of the suction structure 40 sucking the object 8 based on the detection result from at least one sensor in the sensor unit 52. For example, the determiner 137 determines the suction state of the suction structure 40 sucking the object 8 based on the detection result from at least one sensor selected from the group consisting of the negative pressure sensor 54, the pressure sensor 55, the force sensor 56, and the range sensor 57. A suction state hereafter refers to the suction state of the suction structure 40 sucking the object 8.

The hand control device 13 may provide an alert to outside the hand control device 13 based on a determination result from the determiner 137. For example, the interface 132 in the hand control device 13 may provide the alert to the robot control device 12. In this case, the interface 132 functions as a notifier that provides the alert.

### Example Operation of Robot Control System

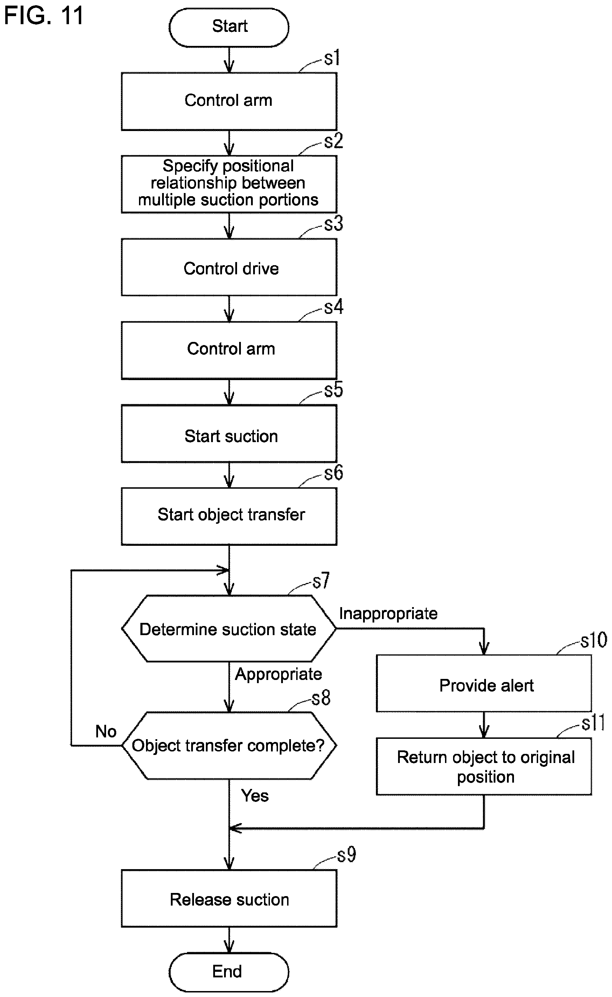

FIG. 11 is a flowchart of example operations of the robot control device 12 and the hand control device 13 performed when the robot 2 transfers the object 8 from the work-start table to the work-target table. For example, the terminal 14 receives, from the user, a work start instruction to instruct the robot 2 to start work. The work start instruction received by the terminal 14 is input into the robot control device 12 and the hand control device 13.

In the robot control device 12 receiving the work start instruction, the controller 120 recognizes, in step s1, the object 8 on the work-start table based on the range image and the color image output from the camera sensor 15. The controller 120 controls the position and the orientation of the arm 3 to position the robot hand 4 above the object 8 based on a recognition result of the object 8. With the robot hand 4 positioned above the object 8, the pad placement plane is, for example, parallel to the work-start table. After moving the robot hand 4 to the position above the object 8, the controller 120 outputs, to the hand control device 13 through the interface 123, execution instruction information indicating an instruction to specify the positional relationship between the multiple suction portions 41.

In the hand control device 13 receiving the execution instruction information, the controller 130 specifies, in step s2, the positional relationship between the multiple suction portions 41 based on the object information in the storage 121. The positional relationship between the multiple suction portions 41 is thus set as appropriate for the object 8. This allows the multiple suction portions 41 to properly suck the object 8. A specific example of step s2 will be described in detail later.

After the positional relationship between the multiple suction portions 41 is specified in step s2, step s3 is performed. In step s3, the drive controller 136 controls the drive 51 based on the specification result obtained in step s2. The positional relationship between the multiple suction portions 41 is thus set to the positional relationship specified in step s2. The drive controller 136 controls the drive 51 to drive the multiple suction portions 41 to have the positional relationship specified in step s2. After the positional relationship between the multiple suction portions 41 has been set, the drive controller 136 outputs, to the robot control device 12 through the interface 132, setting completion information indicating completion of setting of the positional relationship between the multiple suction portions 41.

In the robot control device 12 receiving the setting completion information, step s4 is performed. In step s4, the controller 120 in the robot control device 12 controls the orientation of the arm 3 to move the robot hand 4 downward until the multiple suction pads 410 come in contact with the object 8. In this step, the robot hand 4 moves in a direction perpendicular to the pad placement plane (also referred to as a placement plane perpendicular direction). The controller 120 causes the multiple suction pads 410 to come in proper contact with the object 8 to cause the robot hand 4 to properly suck the object 8. The controller 120 controls the orientation of the arm 3 to cause the opening edges 412 of the multiple suction pads 410 to come in proper contact with the object 8. The controller 120 controls the orientation of the arm 3 to control, for example, a moving speed of the robot hand 4 in the placement plane perpendicular direction. The controller 120 controls the moving speed of the robot hand 4 based on, for example, the detection results from the multiple pressure sensors 55 included in the robot hand 4. The detection result from each of the pressure sensors 55 is input from the hand control device 13 into the robot control device 12. The moving speed of the robot hand 4 is controlled to control the position of each of the suction portions 41 in the robot hand 4 in the placement plane perpendicular direction. The controller 120 identifies, for each of the multiple suction pads 410, the contact pressure applied to the object 8 by the suction pad 410 based on the detection result from the corresponding pressure sensor 55. The controller 120 controls the moving speed of the robot hand 4 to cause each of the suction pads 410 to apply a proper contact pressure to the object 8. In other words, the controller 120 controls the position of the robot hand 4 in the placement plane perpendicular direction to cause the contact pressure applied to the object 8 by each of the suction pads 410 to be within a predetermined range. Each of the suction pads 410 thus comes in proper contact with the object 8, or in other words, is properly pressed against the object 8. This allows each of the suction portions 41 in the robot hand 4 to properly suck the object 8. Upon the multiple suction portions 41 coming in contact with the object 8, the controller 120 outputs, to the hand control device 13 through the interface 123, preparation completion information indicating completion of preparation for starting suction.

Note that the controller 120 may cause each of the suction pads 410 to come in contact with the object 8 by controlling the moving speed of the robot hand 4 based on the detection results from the multiple range sensors 57 included in the robot hand 4. The detection result from each of the range sensors 57 is input from the hand control device 13 into the robot control device 12. The controller 120 identifies, for each of the multiple suction portions 41, the distance between the suction portion 41 and the object 8 based on the detection result from the corresponding range sensor 57. The controller 120 controls the moving speed of the robot hand 4 to properly adjust the distance between each of the suction portions 41 and the object 8. In other words, the controller 120 controls the position of the robot hand 4 in the placement plane perpendicular direction to cause the distance between each of the suction portions 41 and the object 8 to be within a predetermined range. Each of the suction pads 410 thus comes in proper contact with the object 8, allowing each of the suction portions 41 in the robot hand 4 to properly suck the object 8.

The controller 120 may cause each of the suction pads 410 to come in contact with the object 8 by controlling the moving speed of the robot hand 4 based on the detection results from the multiple pressure sensors 55 and the detection results from the multiple range sensors 57. In this case, the controller 120 identifies, for each of the multiple suction pads 410, the contact pressure applied to the object 8 by the suction pad 410 based on the detection result from the corresponding pressure sensor 55. The controller 120 also identifies, for each of the multiple suction portions 41, the distance between the suction portion 41 and the object 8 based on the detection result from the corresponding range sensor 57. The controller 120 controls the moving speed of the robot hand 4 to properly adjust the contact pressure applied to the object 8 by the suction pad 410 in each of the suction portions 41 and to properly adjust the distance between each of the suction portions 41 and the object 8. This allows each of the suction pads 410 to properly come in contact with the object 8.

In the hand control device 13 receiving the preparation completion information, step s5 is performed. In step s5, the controller 130 controls the negative pressure generator 50 to cause the multiple suction portions 41 to suck the object 8 using the negative pressure generator 50. Upon the multiple suction portions 41 starting sucking the object 8, the controller 130 outputs, to the robot control device 12 through the interface 132, suction start information indicating that suction has started.

In the robot control device 12 receiving the suction start information, the controller 120 controls the arm 3 to cause the robot 2 to start transferring the object 8 in step s6. The controller 120 then outputs, to the hand control device 13 through the interface 123, object transfer start information indicating that transfer of the object 8 has started.

In the hand control device 13 receiving the object transfer start information, step s7 is performed. In step s7, the determiner 137 in the controller 130 determines the suction state of the suction structure 40 sucking the object 8 based on the detection results from the sensor unit 52. A specific example of step s7 will be described in detail later.

When the determiner 137 determines that the suction state is appropriate in step s7, step s8 is performed. In step s8, the controller 130 determines whether the robot 2 has completed transferring the object 8. When the object 8 has been transferred to the work-target table, the controller 120 in the robot control device 12 outputs, to the hand control device 13 through the interface 123, transfer completion information indicating that transfer of the object 8 is complete. When the hand control device 13 has received the transfer completion information from the robot control device 12, the controller 130 determines, in step s8, that the robot 2 has completed transferring the object 8. In contrast, when the hand control device 13 has not received the transfer completion information from the robot control device 12, the controller 130 determines that the robot 2 has not completed transferring the object 8.

When the determination result is affirmative in step s8, step s9 is performed. In step s9, the controller 130 controls the negative pressure generator 50 to cause the multiple suction portions 41 to release the suction of the object 8 using the negative pressure generator 50. This causes the object 8 to be placed on the work-target table. In contrast, when the determination result is negative in step s8, step s7 is performed again. In the subsequent steps, the hand control device 13 and the robot control device 12 operate in the same or similar manner.

When the determiner 137 determines that the suction state is inappropriate in step s7, step s10 is performed. In step s10, the controller 130 causes the interface 132 to output alert information indicating an alert. This causes the interface 132 as the notifier to provide the alert to outside the hand control device 13. The alert information is input into the robot control device 12. The alert information may include information indicating the suction state being inappropriate.

The robot control device 12 receiving the alert information performs a process corresponding to the alert from the hand control device 13. For example, in step s 11, the controller 120 controls the arm 3 to cause the robot 2 to return the object 8 to its original position. In other words, the controller 120 causes the robot 2 to transfer the object 8 to the work-start table. When the object 8 has been transferred to the work-start table, the controller 120 outputs, to the hand control device 13 through the interface 123, information indicating that the object 8 has returned to the original position. In the hand control device 13 receiving this information, step s9 is performed to cause the suction structure 40 to release the suction of the object 8. This causes the object 8 to be placed on the work-start table.

Note that the alert information output from the hand control device 13 may be input into the terminal 14. In this case, the terminal 14 receiving the alert information may provide the alert to the user. For example, the terminal 14 may provide the alert to the user using the display included in the terminal 14. The terminal 14 may provide the alert to the user by outputting sound through the speaker included in the terminal 14. The notifier, such as the display, that provides notifications to the user may be included in the system control device 11. In this case, the notifier in the system control device 11 may receive the alert information and provide the alert to the user. The notifier that provides notifications to the user may be included in the hand control device 13. In this case, the notifier in the hand control device 13 may provide the alert to user. The notifier that provides notifications to the user may be included in the robot control device 12. In this case, the notifier in the robot control device 12 may receive the alert information and provide the alert to the user.

The controller 120 may cause the robot 2 to stop transferring the object 8 instead of performing step s 11. In this case, the controller 120 may cause the robot 2 to return the object 8 to the original position in response to an instruction from the user. For example, in response to the alert from the terminal 14, the user inputs a reset instruction into the terminal 14 to return the object 8 to the original position. The reset instruction received by the terminal 14 is input into the robot control device 12. In the robot control device 12 receiving the reset instruction, the controller 120 controls the arm 3 to cause the robot 2 to return the object 8 to the original position. The hand control device 13 then performs step s9.

As described above, the robot hand 4 includes the drive 51 to change the positional relationship between the multiple suction portions 41. This allows the positional relationship between the multiple suction portions 41 to be changed as appropriate for the object 8. The object 8 can thus be sucked properly and more stably. The positional relationship between the multiple suction portions 41 can be changed as appropriate for the type of the object 8. Thus, multiple types of objects 8 can be sucked using the same robot hand 4.

The hand control device 13 specifies the positional relationship between the multiple suction portions 41 based on the object information. The positional relationship between the multiple suction portions 41 can thus be set as appropriate for the object 8. The object 8 can thus be sucked properly and more stably. The object information is updated based on the type of object 8. Thus, multiple types of objects 8 can be sucked using the same robot hand 4.

The hand control device 13 determines the suction state of the suction structure 40 sucking the object 8 based on the detection result from at least one sensor. The suction state can thus be determined properly.

Further, the hand control device 13 provides an alert to outside the hand control device 13 based on the determination result of the suction state. Thus, any inappropriate suction state can be notified to the outside.

### Example Method for Specifying Positional Relationship between Multiple Suction Portions

An operation of the specifier 135 will now be described using an example with four suction pads 410 arranged in a square array as illustrated in FIGs. 5 to 8. Two suction pads 410 arranged diagonally in the suction structure 40 are hereafter referred to as a pad pair. The suction structure 40 includes two pad pairs. Note that the multiple suction pads 410 may be arranged in a manner other than in this example.

### Case of Object Information Including Shape Information

In an example, the object information includes the shape information. In this case, the specifier 135 identifies an upper surface (also referred to as an object upper surface) of the object 8 on the work-start table based on, for example, the shape information. The object upper surface refers to a visible area on the surface of the object 8 placed on the work-start table when the object 8 is viewed from above in the placement plane perpendicular direction. The specifier 135 then determines the center of the identified object upper surface. The specifier 135 specifies the positional relationship between the multiple suction portions 41 to arrange each of the pad pairs symmetrically with respect to the center of the object upper surface when the multiple suction portions 41 suck the object 8. The pad pair arranged symmetrically with respect to a position on the surface of the object 8 herein refers to the two suction pads 410 in the pad pair arranged symmetrically with respect to the position. Thus, in step s3, the positional relationship between the multiple suction portions 41 is set to arrange each of the pad pairs symmetrically with respect to the center of the object upper surface when the multiple suction portions 41 suck the object 8. Thus, when the robot hand 4 moves downward in the placement plane perpendicular direction in step s4, the two diagonally arranged suction pads 410 in each of the pad pairs can suck the object upper surface at positions symmetric with respect to the center of the object upper surface. Each of the pad pairs may be designed to suck the object upper surface at positions as far away as possible from the center of the object upper surface. This allows the object 8 to be sucked by the multiple suction portions 41 more stably.

FIG. 12 is a schematic diagram of the multiple suction pads 410 arranged in the above positional relationship, with the two suction pads 410 in each of the pad pairs sucking the object 8 at positions symmetric with respect to a center 80a of an upper surface 80 of the object 8 (also referred to as an object upper surface 80). FIG. 12 illustrates examples of the object 8 and the multiple suction pads 410 as viewed from above the object 8 in the placement plane perpendicular direction. As illustrated in the example in FIG. 12, four portions sucked by the four suction pads 410 may be at an equal distance from the center 80a of the object upper surface 80.

### Case of Object Information Including Center-of-Gravity Position Information

In another example, the object information includes the center-of-gravity position information indicating the object center-of-gravity position. A plan view of the object 8 and the multiple suction pads 410, as viewed from above the object 8 in the placement plane perpendicular direction, is herein referred to as a specific plan view. FIG. 12 illustrates the object 8 and the suction pads 410 in the specific plan view.

The specifier 135 specifies the positional relationship between the multiple suction portions 41 to, for example, arrange each of the pad pairs symmetrically with respect to the object center-of-gravity position in the specific plan view when the multiple suction portions 41 suck the object 8. The pad pair arranged symmetrically with respect to the object center-of-gravity position in the specific plan view herein refers to the two suction pads 410 in the pad pair arranged symmetrically with respect to the object center-of-gravity position in the specific plan view. Thus, in step s3, the positional relationship between the multiple suction portions 41 is set to arrange each of the pad pairs symmetrically with respect to the object center-of-gravity position in the specific plan view when the multiple suction portions 41 suck the object 8. Thus, when the robot hand 4 moves downward in the placement plane perpendicular direction in step s4, the two diagonally arranged suction pads 410 in each of the pad pairs can suck the object at positions symmetric with respect to the object center-of-gravity position in the specific plan view. This allows the multiple suction portions 41 to suck the object 8 in a more balanced manner than in the example in FIG. 12. The object 8 sucked by the suction structure 40 is less likely to tilt and can be stably sucked by the suction structure 40.

FIG. 13 is a schematic diagram of the multiple suction pads 410 arranged in the above positional relationship, with the two suction pads 410 in each of the pad pairs sucking the object at positions symmetric with respect to an object center-of-gravity position 80x in the specific plan view. FIG. 13 illustrates the object 8 and the suction pads 410 in the specific plan view. As illustrated in the example in FIG. 13, four portions sucked by the four suction pads 410 may be at an equal distance from the object center-of-gravity position 80x in the specific plan view.

### Case of Object Information Including at Least One of First Area Information or Second Area Information

In another example, the object information includes at least one of the first area information or the second area information. An area indicated by at least one of the first area information or the second area information on the surface of the object 8 is herein referred to as a specific area. The specific area includes at least one of the suction-inaccessible area or the suction-prohibited area. In other words, the specific area is an area on the surface of the object 8 that is not to be sucked by the suction structure 40.

The specifier 135 specifies the positional relationship between the multiple suction portions 41 to cause none of the multiple suction portions 41 to face the specific area. Thus, in step s3, the positional relationship between the multiple suction portions 41 is set to cause none of the multiple suction portions 41 to face the specific area. Thus, when the specific area includes the suction-inaccessible area, each of the suction portions 41 can properly suck an area outside the suction-inaccessible area on the surface of the object 8. When the specific area includes the suction-prohibited area, the suction structure 40 is less likely to suck the suction-prohibited area on the object 8.

FIG. 14 is a schematic diagram of the multiple suction portions 41 in an example positional relationship, with none of the multiple suction portions 41 facing the suction-inaccessible area 800. When the multiple suction portions 41 in the positional relationship in FIG. 14 move downward in the placement plane perpendicular direction (the vertical direction in FIG. 1) in step s4, the multiple suction pads 410 can suck the area outside the suction-inaccessible area 800 on the surface of the object 8.

### Case of Object Information Including Shape Information and Center-of-Gravity Position Information

In another example, the object information includes the shape information and the center-of-gravity position information. In this case, the specifier 135 identifies the object upper surface 80 based on, for example, the shape information. The specifier 135 specifies the positional relationship between the multiple suction portions 41 to arrange each of the pad pairs symmetrically with respect to the object center-of-gravity position in the specific plan view when the multiple suction portions 41 suck the object 8. In this case, the specifier 135 specifies the positional relationship between the multiple suction portions 41 to cause the multiple suction portions 41 to suck portions of the identified object upper surface 80 that are as close as possible to the outer edge of the object upper surface 80. This allows the object 8 to be sucked by the multiple suction portions 41 more stably. For example, the specifier 135 may specify the positional relationship between the multiple suction portions 41 to cause the multiple suction portions 41 to suck portions of the identified object upper surface 80 adjacent to its four corners.

### Case of Object Information Including Shape Information and at Least One of First Area Information or Second Area Information

In another example, the object information includes the shape information and at least one of the first area information or the second area information. In this case, the specifier 135 identifies the object upper surface 80 based on, for example, the shape information. The specifier 135 identifies, as a suction-accessible area, an area on the object upper surface 80 excluding the specific area. The specifier 135 then determines the center of the suction-accessible area. The specifier 135 specifies the positional relationship between the multiple suction portions 41 to arrange each of the pad pairs symmetrically with respect to the center of the suction-accessible area when the multiple suction portions 41 suck the object 8. Thus, in step s3, the positional relationship between the multiple suction portions 41 is set to arrange each of the pad pairs symmetrically with respect to the center of the suction-accessible area when the multiple suction portions 41 suck the object 8. Thus, when the robot hand 4 moves downward in the placement plane perpendicular direction in step s4, the two suction pads 410 in each of the pad pairs can suck the suction-accessible area in the object upper surface at positions symmetric with respect to the center of the suction-accessible area. Each of the pad pairs may be designed to suck the suction-accessible area at positions as far away as possible from the center of the suction-accessible area.

### Case of Object Information Including Center-of-Gravity Position Information and at Least One of First Area Information or Second Area Information

In another example, the object information includes the center-of-gravity position information and at least one of the first area information or the second area information. In this case, the specifier 135 specifies the positional relationship between the multiple suction portions 41 to cause none of the multiple suction portions 41 to face the specific area. The specifier 135 specifies the positional relationship between the multiple suction portions 41 to, for example, arrange each of the pad pairs symmetrically with respect to the object center-of-gravity position in the specific plan view when the multiple suction portions 41 suck the object 8. When such a symmetric positional relationship is difficult to achieve, the specifier 135 specifies the positional relationship between the multiple suction portions 41 to cause each of the pad pairs to be at positions as symmetric as possible with respect to the object center-of-gravity position in the specific plan view when the multiple suction portions 41 suck the object 8. This allows the multiple suction portions 41 to suck the surface of the object 8 in a balanced manner without sucking the specific area on the surface.

### Case of Object Information Including Shape Information, Center-of-Gravity Position Information, and at Least One of First Area Information or Second Area Information

In another example, the object information includes the shape information, the center-of-gravity position information, and at least one of the first area information or the second area information. In this case, the specifier 135 identifies the object upper surface 80 based on, for example, the shape information. The specifier 135 identifies, as a suction-accessible area, an area on the object upper surface 80 excluding the specific area. The specifier 135 then specifies the positional relationship between the multiple suction portions 41 to cause the multiple suction portions 41 to suck the suction-accessible area when the robot hand 4 moves downward in step s4. The specifier 135 specifies the positional relationship between the multiple suction portions 41 to, for example, arrange each of the pad pairs symmetrically with respect to the object center-of-gravity position in the specific plan view when the multiple suction portions 41 suck the object 8. When such a symmetric positional relationship is difficult to achieve, the specifier 135 specifies the positional relationship between the multiple suction portions 41 to cause each of the pad pairs to be at positions as symmetric as possible with respect to the object center-of-gravity position in the specific plan view when the multiple suction portions 41 suck the object 8. This allows the multiple suction portions 41 to reliably suck the suction-accessible area on the object 8 in a balanced manner. Example Method for Determining Suction State

When the suction portions 41 suck the object 8 improperly, the negative pressure in the suction pad 410 in each of the suction portions 41 may deviate from its proper value. The determiner 137 may thus determine the suction state based on, for example, the detection results from the multiple negative pressure sensors 54. In this case, the determiner 137 identifies, for example, the negative pressure in each of the suction pads 410 based on the detection result from the corresponding negative pressure sensor 54. When the identified negative pressures are each within a predetermined range, the determiner 137 determines that the suction state is appropriate. In contrast, when one or more of the identified negative pressures are out of the predetermined range, the determiner 137 determines that the suction state is inappropriate. The determination result of the suction state based on the detection results from the multiple negative pressure sensors 54 is hereafter referred to as a first determination result.

When the suction portions 41 suck the object 8 improperly, the contact pressure applied to the object 8 by the suction pad 410 in each of the suction portions 41 may deviate from its proper value. The determiner 137 may thus determine the suction state based on, for example, the detection results from the multiple pressure sensors 55. In this case, the determiner 137 identifies, for each of the suction pads 410, the contact pressure applied to the object 8 by the suction pad 410 based on, for example, the detection result from the corresponding pressure sensor 55. When the identified contact pressures are each within the predetermined range, the determiner 137 determines that the suction state is appropriate. In contrast, when one or more of the identified contact pressures are out of the predetermined range, the determiner 137 determines that the suction state is inappropriate. The determination result of the suction state based on the detection results from the multiple pressure sensors 55 is hereafter referred to as a second determination result.

When the suction portions 41 suck the object 8 improperly, the distance between each of the suction portions 41 and the object 8 may deviate from its proper value. The determiner 137 may thus determine the suction state based on, for example, the detection results from the multiple range sensors 57. In this case, the determiner 137 identifies, for each of the suction portions 41, the distance between the suction portion 41 and the object 8 based on, for example, the detection result from the corresponding range sensor 57. When the identified distances are each within the predetermined range, the determiner 137 determines that the suction state is appropriate. In contrast, when one or more of the identified distances are out of the predetermined range, the determiner 137 determines that the suction state is inappropriate. The determination result of the suction state based on the detection results from the multiple range sensors 57 is hereafter referred to as a third determination result.

The determiner 137 may determine the suction state based on the detection result from the force sensor 56. In an example, the robot hand 4 produces substantially no moment about the x-axis and the y-axis when the multiple suction portions 41 suck the object 8 properly. In this case, the determiner 137 identifies the moment about the x-axis applied to the robot hand 4 and the moment about the y-axis applied to the robot hand 4 based on the detection result from the force sensor 56. When each of the two identified moments is less than or equal to a threshold, the determiner 137 determines that the suction state is appropriate. In contrast, when one or more of the two identified moments are greater than the threshold, the determiner 137 determines that the suction state is inappropriate. Thus, the determiner 137 can determine that the suction state is inappropriate when the object 8 sucked by the robot hand 4 tilts. The determination result of the suction state based on the detection result from the force sensor 56 is hereafter referred to as a fourth determination result.

The determiner 137 may finally determine the suction state based on at least two determination results selected from the group consisting of the first determination result, the second determination result, the third determination result, and the fourth determination result. The first determination result, the second determination result, the third determination result, and the fourth determination result are respectively referred to as a first provisional determination result, a second provisional determination result, a third provisional determination result, and a fourth provisional determination result. The determiner 137 may finally determine the suction state based on at least two provisional determination results selected from the group consisting of the first provisional determination result, the second provisional determination result, the third provisional determination result, and the fourth provisional determination result. For example, when the at least two provisional determination results each indicate the suction state being appropriate, the determiner 137 finally determines that the suction state is appropriate as the determination result in step s7. In contrast, when one or more of the at least two provisional determination results indicate the suction state being inappropriate, the determiner 137 finally determines that the suction state is inappropriate as the determination result in step s7.

As described above, the suction state of the multiple suction portions 41 sucking the object 8 is determined based on the detection result from at least one sensor. The suction state can thus be determined properly.

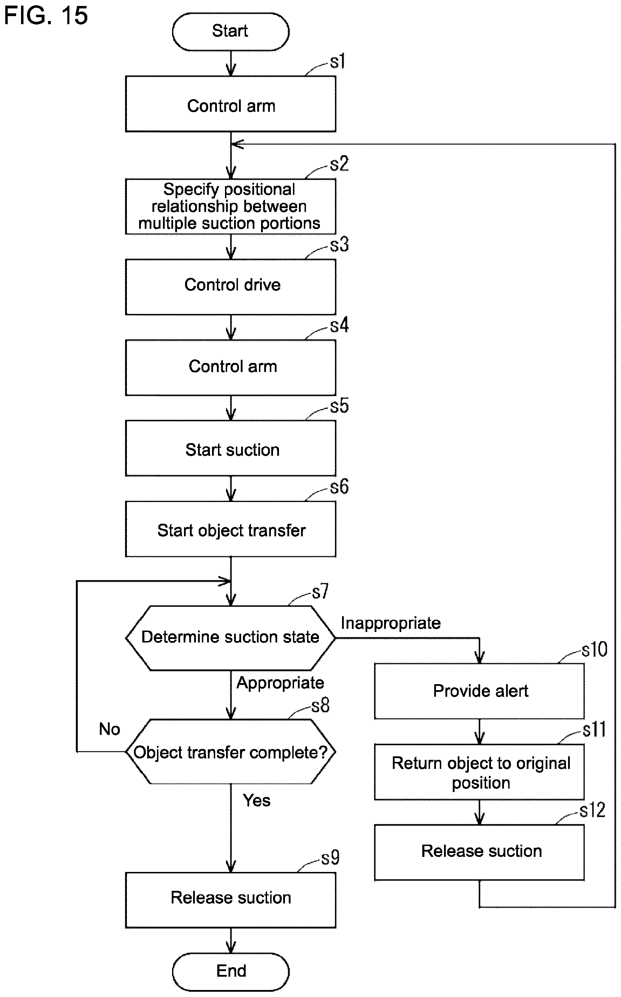

Note that the specifier 135 may re-specify the positional relationship between the multiple suction portions 41 based on the determination result of the suction state from the determiner 137. FIG. 15 is a flowchart of example operations of the hand control device 13 and the robot control device 12 in this case. In the example in FIG. 15, step s12 follows steps S10 and s 11 in response to the suction state being determined to be inappropriate in step s7. In step s12, the controller 130 controls the negative pressure generator 50 to cause the multiple suction portions 41 to release the suction of the object 8 using the negative pressure generator 50, as in step s9. This causes the object 8 to be placed on the work-start table. Step s2 is then performed again. In step s2, the specifier 135 re-specifies the positional relationship between the multiple suction portions 41. For example, the specifier 135 re-specifies the positional relationship between the multiple suction portions 41 to cause all the multiple suction portions 41 to be located more inward. In another example, the specifier 135 re-specifies the positional relationship between the multiple suction portions 41 to cause all the multiple suction portions 41 to be located more outward. When the multiple suction portions 41 are located in an outer portion of the bottom surface 46a, the specifier 135 may re-specify, in step s2, the positional relationship between the multiple suction portions 41 to cause all the multiple suction portions 41 to be located more inward. In contrast, when the multiple suction portions 41 are located in an inner portion of the bottom surface 46a, the specifier 135 may re-specify, in step s2, the positional relationship between the multiple suction portions 41 to cause all the multiple suction portions 41 to be located more outward. After the positional relationship between the multiple suction portions 41 is re-specified in step s2, step s3 is performed. The positional relationship between the multiple suction portions 41 is thus changed to the positional relationship re-specified in step s2. In the subsequent steps, the hand control device 13 and the robot control device 12 operate in the same or similar manner.

As described above, the positional relationship between the multiple suction portions 41 may be re-specified based on the determination result of the suction state from the determiner 137. This can re-specify the positional relationship between the multiple suction portions 41 when their suction state is inappropriate. This improves the suction state of the suction structure 40 sucking the object 8.

Although the suction state is determined independently of the object information in the above example, the suction state may be determined based on the object information. For example, the determination of the suction state in step s7 may be performed when the object information includes at least one selected from the group consisting of the center-of-gravity position information, the first area information, and the second area information, and may not be performed when the object information includes the shape information alone. When the determination of the suction state in step s7 is not performed, step s8 is repeatedly performed until transfer of the object 8 to the work-target table is complete. The determination of the suction state in step s7 may not be performed when the object information includes the center-of-gravity position information alone.

The controller 130 in the hand control device 13 may estimate a weight of the object 8 based on, for example, the detection result from the force sensor 56 while the object 8 is being transferred. In this case, the controller 130 may compare, in step s7, the estimated weight with a set weight of the object 8 stored in the storage 131, in addition to determining the suction state. The set weight of the object 8 refers to a weight set by the user for the object 8. The user inputs the set weight into, for example, the terminal 14. The set weight input into the terminal 14 is input into the hand control device 13 and stored into the storage 131. In step s7, the controller 130 determines, for example, whether an absolute value of the difference between the estimated weight and the set weight is within a predetermined range. When the absolute value of the difference between the estimated weight and the set weight is within the predetermined range and when the suction state is appropriate, the controller 130 performs step s8. In contrast, when the absolute value of the difference between the estimated weight and the set weight is out of the predetermined range or when the suction state is inappropriate, the controller 130 performs step s10 to cause the interface 132 to output the alert information. The alert information may include information indicating that the estimated weight is different from the set weight.

Note that the arm 3 may include a current sensor for detecting a current flowing in a motor that drives a joint in the arm 3. In this case, the controller 130 may estimate the weight of the object 8 based on a detection result from the current sensor. The current sensor may be, for example, a magnetic sensor, a sensor with a shunt resistor, or a sensor with an amplifier. The hand control device 13 may receive the detection result from the current sensor in the arm 3 directly from the current sensor or through the robot control device 12 that controls the arm 3.

The drive 51 may be configured to move at least one of the multiple suction pads 410 away from or closer to the bottom surface 46a of the body 46 of the outer case 45 under control of the controller 130. In this case, for example, the drive 51 may extend or retract at least one of the suction portions 41 to move the suction pad 410 away from or closer to the bottom surface 46a. The position of the at least one of the multiple suction pads 410 may be changed in a direction perpendicular to the bottom surface 46a.

With the suction pad 410 movable away from or closer to the bottom surface 46a in this manner, any range 800 in the upper surface of the object 8 that is lower than the surrounding areas as illustrated in the example in FIG. 10 can be sucked by the suction pad 410 above the range 800.

The robot control device 12 and the hand control device 13 together may be a single control device. At least some of the functions of the controller 130 in the hand control device 13 (e.g., the determiner 137) may be implemented by the controller 120 in the robot control device 12. At least one of the robot control device 12 or the hand control device 13 may control the robot 2 through a network including the Internet. In this case, at least one of the robot control device 12 or the hand control device 13 may be, for example, a cloud server. The cloud server may be implemented by multiple computers. The robot control system 10 may eliminate at least one of the system control device 11 or the terminal 14. The suction structure 40 may include two suction portions 41, or may include four or more suction portions 41.

The robotic system has been described in detail, but the above structures are illustrative in all respects, and the disclosure is not limited to the above structures. The above embodiments may be combined in any manner unless any contradiction arises. Examples other than those illustrated above may also be included without departing from the scope of the present disclosure.

### REFERENCE SIGNS

4 robot hand
8 obj ect
10 robot control system
13 hand control device (processing device)
131a program
40 suction structure
41 suction portion
51 drive
54 negative pressure sensor
55 pressure sensor
56 force sensor
57 range sensor
132 interface
135 specifier
136 drive controller
137 determiner

## Claims

1. A robot hand, comprising:
a suction structure including a plurality of suction portions configured to suck an object; and
a drive configured to change a positional relationship between the plurality of suction portions.

2. The robot hand according to claim 1, wherein
the drive is configured to change a position of each of the plurality of suction portions.

3. The robot hand according to claim 1 or claim 2, wherein
the drive is configured to change the positional relationship between the plurality of suction portions along a plane.

4. The robot hand according to claim 3, wherein
the drive is configured to change the positional relationship between the plurality of suction portions in at least two directions along the plane.

5. A processing device, comprising:
a specifier configured to specify, based on object information about the object, the positional relationship between the plurality of suction portions in the suction structure included in the robot hand according to any one of claims 1 to 4.

6. The processing device according to claim 5, wherein
the object information includes shape information indicating a shape of the object.

7. The processing device according to claim 5 or claim 6, wherein
the object information includes center-of-gravity position information indicating a position of a center of gravity of the object.

8. The processing device according to any one of claims 5 to 7, wherein
the object information includes at least one of first area information or second area information, the first area information indicates an area on a surface of the object inaccessible to sucking performed by the suction structure, and the second area information indicates an area on the surface of the object prohibited from undergoing sucking performed by the suction structure.

9. The processing device according to any one of claims 5 to 8, further comprising:
a drive controller configured to control, based on a specification result from the specifier, the drive included in the robot hand.

10. The processing device according to any one of claims 5 to 9, further comprising:
a determiner configured to determine, based on a detection result from at least one sensor, a suction state of the suction structure sucking the object.

11. The processing device according to claim 10, further comprising:
a notifier configured to provide, based on a determination result from the determiner, an alert to outside the processing device.

12. The processing device according to claim 10 or claim 11, wherein
the specifier is configured to re-specify the positional relationship based on a determination result from the determiner.

13. A drive controller included in the processing device according to claim 9.

14. A program for causing a computer to function as the processing device according to any one of claims 5 to 12.

15. A program for causing a computer to function as the drive controller according to claim 13.

16. A control system, comprising:
the robot hand according to any one of claims 1 to 4; and
the processing device according to any one of claims 5 to 12.
